# EUROPÄISCHE PATENTSCHRIFT

(11) **EP 0 385 974 B1**
(45) Veröffentlichungstag und Bekanntmachung des Hinweises auf die Patenterteilung: **17.03.1993**
(21) Anmeldenummer: 87907223.9
(22) Anmeldetag: 06.11.1987
(51) Int. Cl.: H04N 5/60

(54) **TONKANALSCHALTUNG FÜR DIGITALE FERNSEHEMPFÄNGER**
SOUND CHANNEL CIRCUIT FOR DIGITAL TELEVISION RECEIVERS
CIRCUIT DE CANAL SONORE POUR RECEPTEURS NUMERIQUES DE TELEVISION

(43) Veröffentlichungstag der Anmeldung: 12.09.1990
(73) Patentinhaber: Deutsche ITT Industries GmbH, 79108 Freiburg (DE)
(72) Erfinder: MEHRGARDT, Sönke, D-7806 March (DE); PFEIFER, Heinrich, D-7819 Denzlingen (DE); HILPERT, Thomas, D-7803 Gundelfingen (DE)
(86) Internationale Anmeldenummer: EP8700682
(87) Internationale Veröffentlichungsnummer: WO8904576

(56) Entgegenhaltungen:
- EP-A- 0 204 849
- US-A- 3 952 187
- US-A- 4 019 149
- ICC '80, International Conference on Communications, Seattle, WA, 8.-12. Juni 1980, Conference Record, Band 3 von 3, IEEE, (US), P.R. Hirschler et al.: "A study of DPSK interference on a DPSK channel", Seiten 53.2.1 - 53.2.7 siehe Seite 53.2.2., linke Spalte, Zeilen 38-41; Abbildung 2b

## Beschreibung

Die Erfindung betrifft Tonkanalschaltungen für digitale Fernsehempfänger mit mindestens einem Analog-Digital-Wandler und mindestens einem Digital-Analog-Wandler, wie sie bereits seit längerem handelsüblich sind.

Aufgrund der, weltweit gesehen, verschiedenen Fernseh-Tonübertragungs-Standards ist es wünschenswert, eine universell verwendbare Tonkanalschaltung zu haben, die alle heute üblichen und auch noch die zu erwartenden Fernsehton-Standards zu demodulieren gestattet. Unter den zukünftig zu erwartenden Fernsehton-Standards ist das z.Zt. für die Einführung in Großbritannien und in Skandinavien vorgesehene Verfahren in Zusammenhang mit der Erfindung von Interesse, für das sich die Abkürzung "NICAM" einzubürgern scheint und das in der von IBA und BBC im September 1986 herausgegebene Druckschrift "Specification of Standard for UK Stereo-with-Television Transmissions" erläutert ist.

Die Aufgabe der in den Ansprüchen gekennzeichneten Erfindung besteht somit darin, die erwähnte universell verwendbare Tonkanalschaltung für digitale Fernsehempfänger anzugeben. Ein Vorteil der Erfindung ist darin zu sehen, daß es mit einer einzigen integrierten Tonkanalschaltung möglich ist, ein Multistandard-Fernsehgerät hinsichtlich der verschiedenen Tonübertragungsstandards zu bauen, wobei sich die Tonkanalschaltung an die verschiedenen Standards bei der Wiedergabe entsprechend anpaßt.

Die Erfindung wird nun anhand der Figuren der Zeichnung näher erläutert.
Fig. 1 zeigt das stark schematisierte Blockschaltbild einer ersten Lösungsvariante der Erfindung,
Fig. 2 zeigt das vergleichbare Blockschaltbild einer zweiten Lösungsvariante der Erfindung,
Fig. 3 zeigt das vergleichbare Blockschaltbild einer dritten Lösungsvariante der Erfindung, und
Fig. 4 zeigt ein vergleichbares Blockschaltbild für eine bei der Erfindung vorteilhaft einsetzbaren DQPSK-Teildecoder des eingangs erwähnten "NICAM"-Standards.

In den Figuren der Zeichnung werden durch die quadratischen Blöcke die im einzelnen näher definierten digitalen Teilschaltungen symbolisiert, bei denen es sich um solche mit paralleler Signalverarbeitung handelt, wobei diese auch nach der sogenannten Pipeline-Technik vorgenommen werden kann. Die Eingangs- und Ausgangssignale werden dabei, gestützt auf ein Taktsystem, über Busse angelegt und abgenommen, die in den Figuren der Zeichnung durch die bandförmigen Verbindungsleitungen symbolisiert sind. Für die Realisierung der Tonkanalschaltung nach der Erfindung eignet sich ganz besonders die Technik integrierter Isolierschicht-Feldeffekt-Transistorschaltungen, also die sogenannte MOS-Technik, worin auch die sogenannte CMOS-Technik, also die Realisierung mittels entsprechend komplementärer Feldeffekttransistoren, eingeschlossen sein soll.

Bei den in den Figuren der Zeichnung veranschaulichten Ausführungsbeispielen wird vorausgesetzt, daß mittels eines üblichen Tuners und eines üblichen Mischers das analoge Video-Audio-Signalgemisch va in seiner Basisbandlage aus dem über die Antenne zum Fernsehempfänger gelangenden Antennensignal schon separiert ist, wie dies auch bei den üblichen digitalen Fernsehempfängern durchgeführt wird.

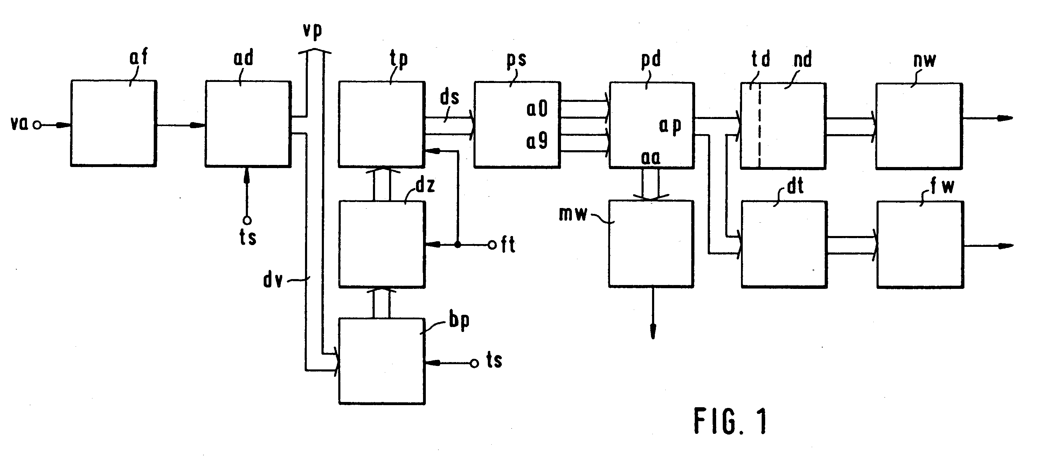

Bei allen drei Lösungsvarianten der Erfindung, wie sie in den Figuren 1 bis 3 gezeigt sind, ist das analoge Video-Audio-Signalgemisch va zunächst dem analogen Anti-Aliasing-Tiefpaß af zugeführt, und das so gefilterte Signal liegt am Eingang des einzigen Analog-Digital-Wandlers ad. Sein Abtastsignal ts hat eine Frequenz in der Größenordnung der vierfachen Farbhilfsträgerfrequenz, d.h., sie wird im allgemeinen zwischen 15 MHz und 25 MHz liegen. Durch den Aliasing-Tiefpaß af sind aus dem analogen Signal bereits diejenigen Signalanteile entfernt, die, wenn sie noch vorhanden wären, nach der Analog-Digital-Wandlung zu Störungen führten.

Der Ausgang des Analog-Digital-Wandlers ad führt zum Bandpaß bp, dessen Mittenfrequenz bzw. dessen Bandbreite gleich der empfangenen fernsehstandardabhängigen Tonträgerfrequenz bzw. der zugehörigen Bandbreite ist, die im folgenden als Nutzband bezeichnet ist. Der Ausgang des Bandpasses bp1 ist mit dem Eingang der Dezimierstufe dz verbunden, deren Taktsignal ft durch eine solche ganzzahlige Frequenzteilung des Abtastsignals ts gewonnen wird, daß das Nutzband durch die Dezimation nicht gestört ist.

Das Ausgangssignal der Dezimierstufe dz ist dem Tiefpaß tp zugeführt, dessen Frequenzgang oberhalb und möglichst parallel mit dem Frequenzgang des Nutzbandes verläuft.

In den Fig. 1 bis 3 ist angedeutet, daß das Ausgangssignal des Analog-Digital-Wandler ad auch an die das reine Videosignal verarbeitenden Teilschaltungen vp des digitalen Fernsehempfängers weitergeleitet werden kann.

Am Ausgang des Tiefpasses tp tritt nur noch das gewünschte digitale Audiosignal ds auf, und dieses ist dem Phasensplitter ps zugeführt, der den 0°-Ausgang a0 und den 90°-Ausgang a9 aufweist. Hierzu kann beispielsweise ein Hilbert-Filter benutzt werden, oder aber auch jede andere Schaltung, die zu einem Eingangssignal das dazu um 90° gedrehte, also orthogonale Signal erzeugt.

Am 0°-Ausgang a0 bzw. am 90°-Ausgang a9 des Phasensplitters ps liegt jeweils einer von zwei Eingängen des Phasendiskriminators pd, der den Betrags-Ausgang aa und den Phasenwinkelausgang ap aufweist. An letzterem sind der DQPSK-Teildecoder td des Decoders nd für den erwähnten "NICAM"-Standard sowie die Differenzierstufe dt, die die digitale Frequenzdemodulation vervollständigt, angeschlossen. Dem Betragsausgang aa, der bei einem amplitudenmodulierten Signal das entsprechende digitale amplitudenmdemodulierte Signal liefert, dem Ausgang des Decoders nd und dem der Differenzierstufe dt ist jeweils der entsprechende Digital-Analog-Wandler mw, nw, fw nachgeschaltet, an deren jeweiligen Ausgang ein üblicher analoger Tonkanalverstärker mit Lautsprecher anschließbar ist, was durch die Pfeile am Ausgang angedeutet ist.

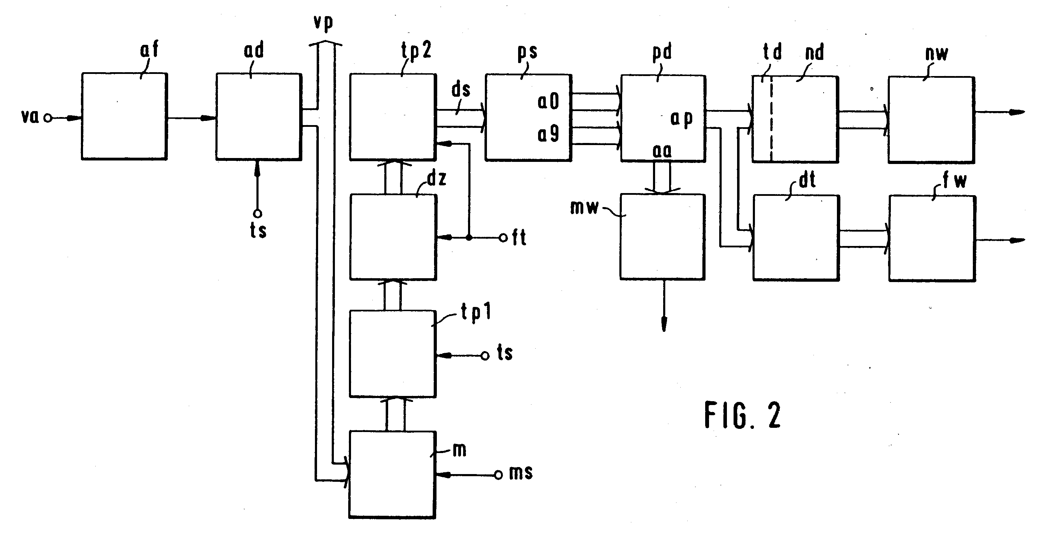

Die zweite Lösungsvariante der Erfindung, die in Fig. 2 schematisch dargestellt ist, unterscheidet sich von der ersten Lösungsvariante nach Fig. 1 dadurch, daß der Ausgang des Analog-Digital-Wandlers ad am Eingang des Mischers m liegt, der in die Basisbandlage des Audiosignals mischt. Sein Ausgang speist den ersten Tiefpaß tp1, dessen Frequenzgang wenig unterhalb der um die Bandbreite des im empfangenen fernsehstandardabhängigen Signal enthaltenen Audiosignals verminderten halben Abtastfrequenz eine Nullstelle hat.

Am Ausgang des ersten Tiefpasses tp1 liegt die Dezimierstufe dz, deren Taktsignal ft eine Frequenz hat, die z.B. gleich einem Viertel der Frequenz des Abtastsignals ts ist, und an deren Ausgang liegt der zweite digitale Tiefpaß tp2, desen Frequenzgang wenig oberhalb des Nutzbandes eine Nullstelle hat und mit dessen Frequenzgang möglichst parallel verläuft.

Die übrigen Teile des Ausführungsbeispiels nach Fig. 2 sind mit denen des Ausführungsbeispiels nach Fig. 1, die dasselbe Bezugszeichen tragen, identisch, so daß auf deren Erläuterung verwiesen werden kann.

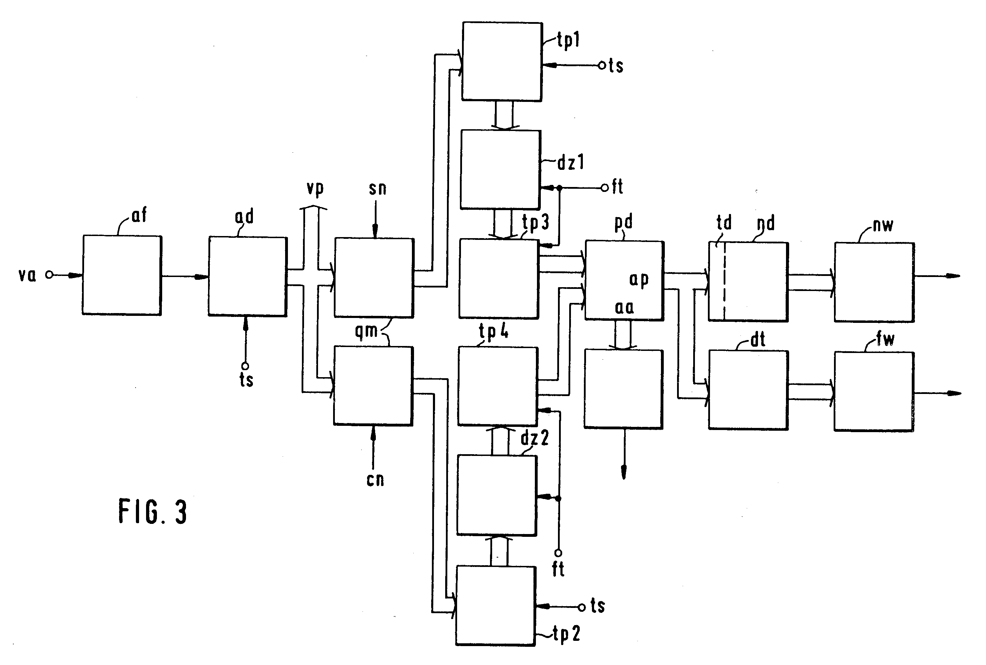

Die dritte Lösungsvariante der Erfindung, deren Blockschaltbild in Fig. 3 gezeigt ist, unterscheidet sich von den beiden anderen Varianten dadurch, daß das Ausgangssignal des Analog-Digital-Wandlers ad den beiden Teilmischern des Quadraturmischers qm zugeführt ist, der wiederum in die Basisbandlage des Audiosignals mischt und denen jeweils das digitale Sinus-Trägersignal sn bzw. digitale Cosinus-Trägersignal cn zugeführt ist.

Am Ausgang des Sinusteils bzw. des Cosinusteils des Quadraturmischers qm liegt der erste bzw. der zweite Tiefpaß tp1, tp2, deren jeweiliger Frequenzgang wenig unterhalb der um die Bandbreite des im empfangenen fernsehstandard-abhängigen Signal enthaltenen Audiosignals verminderten halben Abtastfrequenz eine Nullstelle hat. Am Ausgang des ersten bzw. des zweiten Tiefpasses tp1, tp2 liegt die erste bzw. die zweite Dezimierstufe dz1, dz2, deren gemeinsames Taktsignal ft eine Frequenz hat, die z.B. gleich einem Viertel der Frequenz des Abtastsignals ts ist.

Am Ausgang der ersten bzw. der zweiten Dezimierstufe dz1, dz2 liegt der dritte bzw. der vierte Tiefpaß tp3, tp4, dessen jeweiliger Frequenzgang wenig oberhalb des Nutzbandes eine Nullstelle hat und mit dessen Frequenzgang möglichst parallel verläuft.

Der Ausgang des dritten bzw. des vierten Tiefpasses tp3, tp4 liegt am ersten bzw. zweiten Eingang des Phasendiskriminators pd mit dem Betrags- und dem Phasenwinkelausgang aa, ap. Die weitere Schaltung ist mit der der Fig. 1 und 2 identisch.

Die universelle Verwendbarkeit der Tonkanalschaltungen nach der Erfindung beruht darauf, daß mittels des Phasensplitters ps zunächst zueinander orthogonale Signale erzeugt werden, aus denen mittels des Phasendiskriminators pd ein Betragssignal und ein Winkelsignal erzeugt wird. Bei vorliegender Amplitudenmodulation des Tonträgers stellt das Betragssignal die demodulierte Audio-Information dar, bei vorliegender Frequenzmodulation oder Differential-Quadrature-Phase-Shift-Keying-Modulation kann aus dem Phasensignal des Audiosignal gewonnen werden. Dies geschieht bei dem erwähnten "NICAM"-Standard direkt aus dem Winkelsignal, während bei Frequenzmodulation aus dem Winkelsignal über die Differenzierstufe dt das Audiosignal gewonnen wird. Beim deutschen Stereo-Fernsehton-Standard kann durch Zweifachausnutzung des Phasendiskriminators im Zeitmultiplex die Demodulation der beiden Stereokanäle erreicht werden.

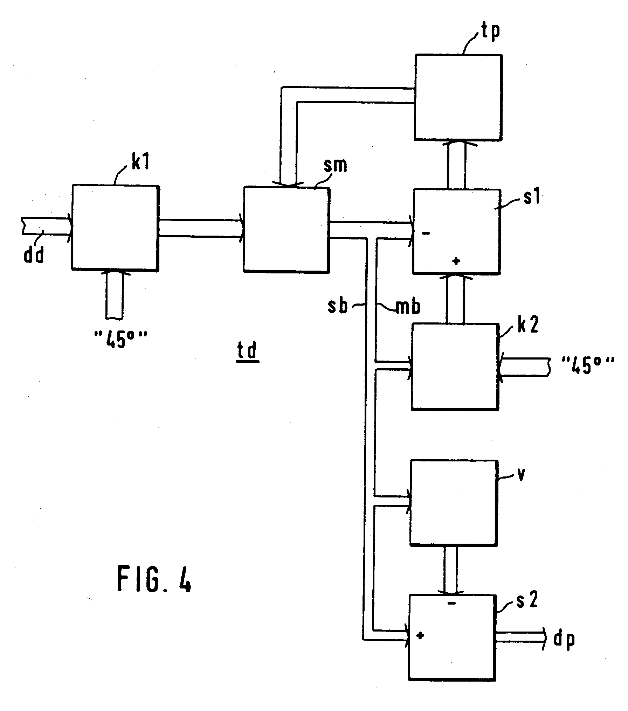

In Fig. 4 ist das Blockschaltbild des bevorzugten Ausführungsbeispiels eines DQPSK-Teildecoders td zur Separierung von DPSK-Datenpaaren dp aus den Phasenwinkel- oder -differenzdaten dd gezeigt, die aus den am Phasenwinkelausgang ap des Phasendiskriminators pd auftretenden Signalen in bekannter Weise mittels des sogenannten Timing Recovery gewonnen werden, vgl. "IEEE Transactions on Communications" Mai 1986, Seiten 423 bis 429.

Zum Verständnis der folgenden Beschreibung sei zunächst auf das Differential-Quadrature- oder Quarternary-Phase-Shift-Keying- Modulationsverfahren, aus dem das Akronym DQPSK abgeleitet ist, eingegangen. Dabei wird zur getakteten Übertragung serieller Binärdaten über einen band begrenzten Kanal zunächst der Strom der Binärdaten in eine getaktete Folge von jeweils zwei zusammengehörenden, also zweistelligen, Daten, die auch als Symbole bezeichnet werden, gruppiert, so daß die vier Digitalwörter 00, 01, 10, 11 entstehen. Bezeichnet man die Frequenz des Taktes des Stroms der Binärdaten als Datenrate, so ist die Symbolrate gleich der halben Datenrate.

Mit diesen (zweistelligen) Digitalwörtern könnten, wenn man sie als Koordinaten eines rechtwinkligen Koordinatensystems interpretiert und wenn man sie als Dualzahlen in Zweierkomplementdarstellung betrachtet, die vier Schnittpunkte des Einheitskreises mit den Koordinatenachsen dargestellt werden, d.h. die vier Winkel 0°, 90°, 180° und 270°. Beim Differential Quadrature Phase Shift Keying werden solche Digitalworte als DPSK-Datenpaare nun aber jeweils zur Darstellung der Phasendifferenz zum vorausgegangenen Phasenwert benutzt, und zwar derart, daß z.B. den DPSK-Datenpaaren 00, 10, 11, bzw. 01 die Phasendifferenzen 0°, 90° oder -270°, +/-180° bzw. 270° oder -90° entsprechen.

Für die Übertragung der DPSK-Datenpaare werden diese analog oder digital gefiltert, wobei im letzteren Fall die Frequenz des Taktsignals der dafür erforderlichen beiden Digitalfilter im allgemeinen größer ist als die oben erwähnte Taktfrequenz.

Anschließend an die Filterung werden deren Ausgangssignale einer Quadraturamplitudenmodulation unterzogen, und zwar bei analoger Filterung zweckmäßigerweise einer analogen Quadraturmodulation, dagegen bei Digitalfilterung zweckmäßigerweise einer digitalen Quadraturmodulation, d.h. der Träger besteht dann nicht aus einem kontinuierlichen Signal, sondern entsprechend dem Abtasttheorem wiederum (nur) aus abgetasteten Amplituden des Trägersignals.

Nach dieser Quadraturmodulation werden die zueinander orthogonalen Signale der beiden "Kanäle" addiert und anschließend digital-analog-gewandelt und in dieser Form auf die Übertragungsstrecke gegeben.

Auf der Empfängerseite wird zunächst eine Analog-Digital-Wandlung mit entsprechend hoher Abtastrate mit anschließender (digitaler) Quadraturamplitudendemodulation vorgenommen, so daß an deren beiden Ausgängen ein Strom digitaler orthogonaler Signalpaare vorliegt. Anschließende Tiefpaß-Filterung beider Kanäle ergibt ein Signalpaar, aus dem die Symbolrate (= doppelte Datenrate) hinsichtlich Frequenz und Phase wiedergewonnen werden muß. Dies kann beispielsweise in der in der Zeitschrift "IEEE Transactions on Communications", Mai 1986, Seiten 423 bis 429 geschilderten Weise vorgenommen werden.

Im Fernsehempfänger erfolgt die anhand der Figuren 1 bis 3 geschilderte Signalverarbeitung einschließlich des erwähnten Timing Recovery. Die Phasendaten dd am Ausgang ap des Phasendiskriminators pd, die die Information über die erläuterte Phasendifferenz aufweisen, sind noch mehrstellige Digitalwörter, aus denen die Phasendifferenzdaten separiert werden müssen. Dies geschieht mit der Anordnung nach Fig. 4.

Die Phasendaten dd sind dem ersten Konstanten-Addierer k1 zugeführt, dem auch das dem Phasenwinkel 45° entsprechende Digitalwort "45°" zugeführt ist. Sein Ausgang liegt am ersten Eingang des Addierers sm, dessen Ausgang am Subtrahend-Eingang des ersten Subtrahierers s1 angeschlossen ist.

Ferner ist der zweite Konstanten-Addierer k2 vorgesehen, dem als Konstante ebenfalls das dem Phasenwinkel 45° entsprechende Digitalwort "45°" zugeführt ist und dessen Ausgang am Minuend-Eingang des ersten Subtrahierers s1 liegt. Vom Ausgangssignal des Addierers sm werden die Vorzeichenstelle sb und die höchstwertige Stelle mb als zweistelliges Signal dem zweiten Eingang des Konstanten-Addieres k2 zugeführt, ebenso wie dem Eingang des Verzögerers v und dem Minuend-Eingang des zweiten Subtrahierers s2, an dessen Ausgang die Phasendifferenzdaten dp abzunehmen sind. Die Verzögerungszeit des Verzögerers v ist gleich der Periodendauer der ursprünglichen Datenrate der DPSK-Datenpaare zu wählen.

Der Ausgang des ersten Subtrahierers s1 ist über den als PLL-Schleifenfilter dienenden Tiefpaß tp mit dem zweiten Eingang des Addieres sm verbunden.

Durch die Addition des 45°-Digitalworts zu den Phasendaten dd und zur Vorzeichenstelle sowie zur höchstwertigen Stelle des Ausgangssignals des Addierers sm wird die sichere Wiedergewinnung der Phasendifferenzdaten erreicht.

## Patentansprüche

1. Tonkanalschaltung für digitale Fernsehempfänger mit mindestens einem Analog-Digital-Wandler und mindestens einem Digital-Analog-Wandler,
gekennzeichnet durch folgende Merkmale:
- das analoge Video-Audio-Signalgemisch (va) in Basisbandlage ist über einen analogen Anti-Aliasing-Tiefpaß (af) einem einzigen Analog-Digital-Wandler (ad) zugeführt, dessen Abtastsignal (ts) eine Frequenz in der Größenordnung der vierfachen Farbhilfsträgerfrequenz hat,
- der Ausgang des Analog-Digital-Wandlers (ad) führt zu einem digitalen Bandpaß (bp), dessen Mittenfrequenz bzw. dessen Bandbreite gleich der empfangenen fernsehstandard-abhängigen Tonträgerfrequenz bzw. der zugehörigen Bandbreite (= Nutzband) ist,
- der Ausgang des Bandpasses (bp) ist mit dem Eingang einer Dezimierstufe (dz) verbunden, deren Taktsignal (ft) durch eine solche ganzzahlige Frequenzteilung des Abtastsignals (ts) gewonnen ist, daß das Nutzband durch die Dezimation nicht gestört ist,
- das Ausgangssignal der Dezimierstufe (dz) ist einem digitalen Tiefpaß (tp) zugeführt, dessen Frequenzgang oberhalb und möglichst parallel mit dem Frequenzgang des Nutzbandes verläuft,
- das Ausgangssignal (ds) des Tiefpasses (tp) ist einem Phasensplitter (ps) zugeführt,
- an dessen 0°-Ausgang (a0) bzw. dessen 90°-Ausgang (a9) liegt jeweils einer von zwei Eingängen eines Phasendiskriminators (pd) mit einem Betrags- und einem Phasenwinkelausgang (aa, ap),
- dieser speist einen DQPSK-Teildecoder (td) eines Decoders (nd) für den "NICAM"-Standard sowie mindestens eine Differenzierstufe (dt), und
- dem Betragsausgang (aa) sowie dem Decoder (nd) und der Differenzierstufe (dt) ist jeweils ein Digital-Analog-Wandler (mw, nw, fw) nachgeschaltet.

2. Tonkanalschaltung für digitale Fernsehempfänger mit mindestens einem Analog-Digital-Wandler und mindestens einem Digital-Analog-Wandler,
gekennzeichnet durch folgende Merkmale:
- das analoge Video-Audio-Signalgemisch (va) in Basisbandlage ist über einen analogen Anti-Aliasing-Tiefpaß (af) einem einzigen Analog-Digital-Wandler (ad) zugeführt, dessen Abtastsignal (ts) eine Frequenz in der Größenordnung der vierfachen Farbhilfsträgerfrequenz hat,
- der Ausgang des Analog-Digital-Wandlers (ad) liegt am Eingang eines Mischers (m), der in die Basisbandlage des Audiosignals (= Nutzband) mischt,
- am Ausgang des Mischers (m) liegt ein erster digitaler Tiefpaß (tp1), dessen Frequenzgang wenig unterhalb der um die Bandbreite des im empfangenen fernsehstandardabhängigen Signal enthaltenen Audiosignals verminderten halben Abtastfrequenz eine Nullstelle hat,
- am Ausgang des ersten Tiefpasses (tp1) liegt eine Dezimierstufe (dz), deren Taktsignal (ft) eine Frequenz hat, die z.B. gleich einem Viertel der Frequenz des Abtastsignals (ts) ist,
- am Ausgang der Dezimierstufe (dz) liegt ein zweiter digitaler Tiefpaß (tp2), dessen Frequenzgang wenig oberhalb des Nutzbandes eine Nullstelle hat und mit dessen Frequenzgang möglichst parallel verläuft,
- am 0°-Ausgang (a0) bzw. am 90°-Ausgang (a9) eines dem zweiten Tiefpaß (tp2) nachgeschalteten Phasensplitters (ps) liegt jeweils einer von zwei Eingängen eines Phasendiskriminators (pd) mit einem Betrags- und einem Phasenwinkelausgang (aa, ap)
- dieser speist einen DQPSK-Teildecoder (td) eines Decoders (nd) für den "NICAM"-Standard sowie eine Differenzierstufe (dt), und
- dem Betragsausgang (aa) sowie dem Decoder (nd) und der Differenzierstufe (dt) ist jeweils ein Digital-Analog-Wandler (mw, nw, fw) nachgeschaltet.

3. Tonkanalschaltung für digitale Fernsehempfänger mit mindestens einem Analog-Digital-Wandler und mindestens einem Digital-Analog-Wandler,
gekennzeichnet durch folgende Merkmale:
- das analoge Video-Audio-Signalgemisch (va) in Basisbandlage ist über einen analogen Anti-Aliasing-Tiefpaß (af) einem einzigen Analog-Digital-Wandler (ad) zugeführt, dessen Abtastsignal (ts) eine Frequenz in der Größenordnung der vierfachen Farbhilfsträgerfrequenz hat,
- der Ausgang des Analog-Digitalwandlers (ad) liegt am Eingang eines Quadraturmischers (qm), der in die Basisbandlage des (= Nutzband) Audiosignals mischt,
- am Ausgang des Sinusteils bzw. des Cosinusteils des Quadraturmischers (qm) liegt ein erster bzw. ein zweiter digitaler Tiefpaß (tp1, tp2), deren jeweiliger Frequenzgang wenig unterhalb der um die Bandbreite des im empfangenen fernsehstandard-abhängigen Signal enthaltenen Audiosignals verminderten halben Abtastfrequenz eine Nullstelle hat,
- am Ausgang des ersten bzw. des zweiten Tiefpasses (tp1, tp2) liegt eine erste bzw. eine zweite Dezimierstufe (dz1, dz2), deren gemeinsames Taktsignal (ft) eine Frequenz hat, die z.B. gleich einem Viertel der Frequenz des Abtastsignals (ts) ist,
- am Ausgang der ersten bzw. der zweiten Dezimierstufe (dz1, dz2) liegt ein dritter bzw. ein vierter digitaler Tiefpaß (tp3, tp4), dessen jeweiliger Frequenzgang wenig oberhalb des Nutzbandes eine Nullstelle hat und mit dessen Frequenzgang möglichst parallel verläuft,
- der Ausgang des dritten bzw. des vierten Tiefpasses (tp3, tp4) liegt am ersten bzw. zweiten Eingang eines Phasendiskriminators (pd) mit einem Betrags- und einem Phasenwinkelausgang (aa, ap),
- der Phasenwinkelausgang (ap) speist einen DQPSK-Teildecoder (td) eines Decoders (nd) für den "NICAM"-Standard sowie eine Differenzierstufe (dt), und
- dem Betragsausgang (aa) sowie dem Decoder (nd) und der Differenzierstufe (dt) ist jeweils ein Digital-Analog-Wandler (mw, nw, fw) nachgeschaltet.

4. Tonkanalschaltung nach einem der Ansprüche 1 bis 3 mit einem DQPSK-Teildecoder (td) zur Rückgewinnung von Phasendifferenzdaten (dp) aus mehrstelligen, mit der ursprünglichen Datenrate von DPSK-Datenpaaren vorliegenden Phasendaten (dd), mit
- einem ersten Konstanten-Addierer (k1), dem ein dem Phasenwinkel 45° entsprechendes Digitalwort ("45°") und die Phasendaten (dd) zugeführt sind,
- einem Addierer (sm), dessen erster Eingang am Ausgang des ersten Konstanten-Addierers (k1) liegt,
- einem ersten Subtrahierer (s1), dessen Subtrahend-Eingang am Ausgang des Addierers (sm) angeschlossen ist,
- einem zweiten Subtrahierer (s2), an dessen Ausgang die Phasendifferenzdaten (dp) abzunehmen sind und ein DPSK-Decoder mit nachfolgendem "NICAM"-Decoder angeschlossen ist,
- einem Verzögerer (v), dessen Verzögerungszeit gleich der Periodendauer der Datenrate ist und dessen Ausgang am Subtrahend-Eingang des zweiten Subtrahierers (s2) liegt,
- einem zweiten Konstanten-Addierer (k2), dem das dem Phasenwinkel 45° entsprechende Digitalwort ("45°") zugeführt ist,
- wobei der Minuend-Eingang des zweiten Subtrahierers (s2), der Verzögerer (v) und der zweite Konstanten-Addierer (k2) von der Vorzeichenstelle (sb) und der höchstwertigen Stelle (mb) des Ausgangssignals des Addieres (sm) gespeist sind, und
- einem Tiefpaß (tp) als PLL-Schleifenfilter, über den der Ausgang des ersten Subtrahierers (s1) mit dem zweiten Eingang des Addierers (sm) verbunden ist.

## Claims

1. Sound channel circuit for digital television receivers comprising at least one analog-to-digital converter and at least one digital-to-analog converter,
characterized by the following features:
- The analog sound and video signal (va) at baseband is fed through an analog antialiasing low-pass filter (af) to a single analog-to-digital converter (ad) whose sampling signal (ts) has a frequency of the order of four times the chrominance-subcarrier frequency;
- the output of the analog-to-digital converter (ad) is coupled to a digital bandpass filter (bp) whose midfrequency and bandwidth are equal, respectively, to the received, television-standard-dependent sound carrier frequency and the bandwidth associated therewith (= useful band);
- the output of the bandpass filter (bp) is connected to the input of a decimation stage (dz) whose clock signal (ft) is derived by dividing the frequency of the sampling signal (ts) by such an integer that the useful band is not affected by the decimation;
- the output of the decimation stage (dz) is applied to a digital low-pass filter (tp) whose frequency characteristic runs above, and as parallel as possible to, the frequency characteristic of the useful band;
- the output (ds) of the low-pass filter (tp) is fed to a phase splitter (ps)
- having a 0° output (a0) and a 90° output (a9) each connected to one of two inputs of a phase discriminator (pd) with an absolute-value output (aa) and a phase-angle output (ap);
- the phase-angle output (ap) feeds a DQPSK portion (td) of a decoder (nd) for the "NICAM" standard and at least one differentiating stage (dt), and
- the absolute-value output (aa), the decoder (nd), and the differentiating stage (dt) are each followed by a digital-to-analog converter (mw, nw, fw).

2. Sound channel circuit for digital television receivers comprising at least one analog-to-digital converter and at least one digital-to-analog converter,
characterized by the following features:
- The analog sound and video signal (va) at baseband is fed through an analog antialiasing low-pass filter (af) to a single analog-to-digital converter (ad) whose sampling signal (ts) has a frequency of the order of four times the chrominance-subcarrier frequency;
- the output of the analog-to-digital converter (ad) is coupled to the input of a mixer (m) which converts the received signal to the baseband of the sound signal (= useful band);
- the output of the mixer (m) is coupled to a first digital low-pass filter (tp1) whose frequency characteristic has a zero just below one-half the sampling frequency reduced by the bandwidth of the sound signal contained in the received, television-standard-dependent signal;
- the output of the first low-pass filter (tp1) is coupled to a decimation stage (dz) whose clock signal (ft) has a frequency equal to, e.g., one quarter of the frequency of the sampling signal (ts);
- the output of the decimation stage (dz) is coupled to a second digital low-pass filter (tp2) whose frequency characteristic has a zero just above the useful band and runs as parallel as possible to the frequency characteristic of the useful band;
- the second low-pass filter (tp2) is followed by a phase splitter (ps) having a 0° output (a0) and a 90° output (a9) each connected to one of two inputs of a phase discriminator (pd) with an absolute-value output (aa) and a phase-angle output (ap);
- the phase-angle output (ap) feeds a DQPSK portion (td) of a decoder (nd) for the "NICAM" standard and at least one differentiating stage (dt), and
- the absolute-value output (aa), the decoder (nd), and the differentiating stage (dt) are each followed by a digital-to-analog converter (mw, nw, fw).

3. Sound channel circuit for digital television receivers comprising at least one analog-to-digital converter and at least one digital-to-analog converter,
characterized by the following features:
- The analog sound and video signal (va) at baseband is fed through an analog antialiasing low-pass filter (af) to a single analog-to-digital converter (ad) whose sampling signal (ts) has a frequency of the order of four times the chrominance-subcarrier frequency;
- the output of the analog-to-digital converter (ad) is coupled to the input of a quadrature mixer (qm) which converts the received signal to the baseband of the sound signal (= useful band);
- the quadrature mixer (qm) consists of a sine portion and a cosine portion connected, respectively, to a first digital low-pass filter (tp1) and a second digital low-pass filter (td2) whose frequency characteristics have a zero just below one-half the sampling frequency reduced by the bandwidth of the sound signal contained in the received, television-standard-dependent signal;
- the outputs of the first and second low-pass filters (tp1, tp2) are coupled to a first decimation stage (dz1) and a second decimation stage (dz2), respectively, whose common clock signal (ft) has a frequency equal to, e.g., one quarter of the frequency of the sampling signal (ts);
- the outputs of the first and second decimation stages (dz1, dz2) are coupled to a third digital low-pass filter (tp3) and a fourth digital low-pass filter (tp4), respectively, whose frequency characteristics have a zero just above the useful band and run as parallel as possible to the frequency characteristic of the useful band;
- the outputs of the third and fourth low-pass filters (tp3, tp4) are coupled to the first input and the second input, respectively, of a phase discriminator (pd) having an absolute-value output (aa) and a phase-angle output (ap);
- the phase-angle output (ap) feeds a DQPSK portion (td) of a decoder (nd) for the "NICAM" standard and at least one differentiating stage (dt), and
- the absolute-value output (aa), the decoder (nd), and the differentiating stage (dt) are each followed by a digital-to-analog converter (mw, nw, fw).

4. Sound channel circuit as claimed in any one of claims 1 to 3 and in which the DQPSK decoder portion (td) serves to recover phase-difference data (dp) from multibit phase data present at the original data rate of DPSK data pairs, comprising
- a first constant adder (k1) to which a digital word ("45°") corresponding to the phase angle 45° and the phase data (dd) are applied;
- an adder (sm) having its first input connected to the output of the first constant adder (k1);
- a first subtracter (s1) having its subtrahend input connected to the output of the adder (sm);
- a second subtracter (s2) whose output provides the phase-difference data (dp) and is connected to a DPSK decoder followed by a "NICAM" decoder;
- a delay element (v) which provides a delay equal to the period of the data rate and whose output is coupled to the subtrahend input of the second subtracter (s2);
- a second constant adder (k2) to which the digital word ("45°") corresponding to the phase angle 45° is applied,
- with the minuend input of the second subtracter (s2), the delay element (v), and the second constant adder (k2) fed by the sign bit (sb) and the most significant bit (mb) of the output of the adder (sm), and
- a low-pass filter (tp) acting as a PLL filter via which the output of the first subtracter (s1) is connected to the second input of the adder (sm).

## Revendications

1. Circuit du canal son pour des récepteurs numériques de télévision comportant au moins un convertisseur analogique/numérique et au moins un convertisseur numérique/analogique,
caractérisé par les caractéristiques suivantes :
- le mélange analogique de signaux vidéo-audio (va) dans la position de la bande de base est envoyé, par l'intermédiaire d'un filtre passe-bas analogique (af) de suppression des signaux fantômes, à un seul convertisseur analogique/numérique (ad), dont le signal d'échantillonnage (ts) possède une fréquence dont l'ordre de grandeur est égal à quatre fois la fréquence porteuse auxiliaire couleurs,
- la sortie du convertisseur analogique/numérique (ad) est raccordée à un filtre passe-bande numérique (bp), dont la fréquence centrale ou la largeur de bande est égale à la fréquence porteuse son reçue, qui dépend du standard de télévision ou à la largeur de bande associée (= bande utile),
- la sortie du filtre passe-bande (bp) est raccordée à l'entrée d'un étage de décimalisation (dz), dont le signal de cadence (ft) est obtenu par une division de la fréquence du signal d'échantillonnage (ts) par un nombre entier de telle sorte que la bande utile n'est pas perturbée par la décimalisation,
- le signal de sortie de l'étage de décimalisation (dz) est envoyé à un filtre passe-bas numérique (tp), dont la réponse en fréquence est supérieure et autant que possible parallèle à la réponse en fréquence de la bande utile,
- le signal de sortie (ds) du filtre passe-bas (tp) est envoyé à un diviseur de phase (ps),
- à l'entrée 0° (a0) et à la sortie à 90° (a9) duquel sont raccordées respectivement l'une de deux entrées d'un discriminateur de phase (pd) possédant une sortie délivrant la valeur absolue et une sortie délivrant l'angle de phase (aa, ap),
- ce discriminateur alimente un décodeur partiel DQPSK (td) d'un décodeur (nd) pour le standard "NICAM" ainsi qu'au moins un étage différentiateur (dt), et
- respectivement un convertisseur numérique/analogique (mw, nw, fw) est branché en aval de la sortie de la valeur absolue (aa) ainsi que du décodeur (nd) et de l'étage différentiateur (dt).

2. Circuit du canal son pour des récepteurs numériques de télévision comportant au moins un convertisseur analogique/numérique et au moins un convertisseur numérique/analogique,
caractérisé par les caractéristiques suivantes :
- le mélange analogique de signaux vidéo-audio (va) dans la position de bande de base est envoyé, par l'intermédiaire d'un filtre passe-bas analogique (af) de suppression de signaux fantômes, à un seul convertisseur analogique/numérique (ad), dont le signal d'échantillonnage (ts) possède une fréquence dont l'ordre de grandeur est égal au quadruple de la fréquence porteuse auxiliaire couleurs,
- la sortie du convertisseur analogique/numérique (ad) est raccordée à l'entrée d'un mélangeur (m), qui réalise un mélange dans la position de bande de base du signal audio (= bande utile),
- à la sortie du mélangeur (m) est raccordé un premier filtre passe-bas numérique (tp1), dont la réponse en fréquence possède un point d'annulation, légèrement au-dessous de la moitié de la fréquence d'échantillonnage diminuée de la largeur de bande du signal audio contenu dans le signal reçu qui dépend du standard de télévision,
- à la sortie du premier filtre passe-bas (tp1) est raccordé un étage de décimalisation (dz), dont le signal de cadence (ft) possède une fréquence qui est égale par exemple au quart de la fréquence du signal d'échantillonnage (ts),
- à la sortie de l'étage de décimalisation (dz) est raccordé un second filtre passe-bas numérique (tp2), dont la réponse en fréquence possède un point d'annulation, légèrement au-dessous de la bande utile, et est autant que possible parallèle à la réponse en fréquence de la bande utile,
- à la sortie à 0° (a0) et à la sortie à 90° (a9) d'un diviseur de phase (ps) branché en aval du second filtre passe-bas (tp2) est raccordée respectivement l'une de deux entrées d'un discriminateur de phase (pd) comportant une sortie pour la valeur absolue et une sortie pour l'angle de phase (aa, ap),
- ce discriminateur alimente un décodeur partiel DQPSK (td) d'un décodeur (nd) pour le standard "NICAM" ainsi qu'un étage différentiateur (dt), et
- respectivement un convertisseur numérique/analogique (mw, nw, fw) est branché en aval de la sortie de valeur absolue (aa) ainsi que du décodeur (nd) et de l'étage différentiateur (dt).

3. Circuit du canal son pour des récepteurs numériques de télévision comportant au moins un convertisseur analogique/numérique et au moins un convertisseur numérique/analogique,
caractérisé par les caractéristiques suivantes :
- le mélange analogique de signaux vidéo-audio (va) dans la position de la bande de base est envoyé, par l'intermédiaire d'un filtre passe-bas analogique (af) de suppression des signaux fantômes, à un seul convertisseur analogique/numérique (av), dont le signal d'échantillonnage (ts) possède une fréquence dont l'ordre de grandeur est égal à quatre fois la fréquence porteuse auxiliaire couleurs,
- la sortie du convertisseur analogique/numérique (ad) est raccordée à l'entrée d'un mélangeur en quadrature (qm), qui réalise un mélange dans la position de bande de base du signal audio (= bande utile),
- à la sortie de la partie sinus et de la partie cosinus du mélangeur en quadrature (qm) sont raccordés les premier et second filtres passe-bas numérique (tp1, tp2), dont la réponse en fréquence respective possède un point d'annulation, légèrement au-dessous de la moitié de la fréquence d'échantillonnage, diminuée de la largeur de bande du signal audio contenu dans le signal reçu, qui dépend du standard de télévision,
- aux sorties des premier et second filtres passe-bas (tp1, tp2) sont raccordés des premier et second étages de décimalisation (dz1, dz2), dont le signal de cadence commun (ft) possède une fréquence qui est par exemple égale à un quart de la fréquence du signal d'échantillonnage (ts),
- aux sorties des premier et second étages de décimalisation (dz1, dz2) sont racccordés des troisième et quatrième filtres passe-bas numériques (tp3, tp4), dont la réponse en fréquence respective possède un point d'annulation, légèrement au-dessus de la bande utile, et est autant que possible parallèle à la réponse en fréquence de la bande utile,
- les sorties des troisième et quatrième filtres passe-bas (tp3, tp4) sont raccordées aux première et seconde entrées d'un discriminateur de phase (pd) comportant une sortie pour la valeur absolue et une sortie pour l'angle de phase (aa, ap),
- la sortie (ap) délivrant l'angle de phase alimente un décodeur partiel DQPSK (td) d'un décodeur (nd) pour le standard "NICAM", ainsi qu'un étage différentiateur (dt), et
- des convertisseurs numérique/analogique respectifs (mw, nw, fw) sont branchés en aval de la sortie (aa) délivrant la valeur absolue ainsi que du décodeur (nd) et de l'étage différentiateur (dt).

4. Circuit du canal son selon l'une des revendications 1 à 3 comportant un décodeur partiel DQPSK (td) servant à récupérer des données de différence de phase (dp) à partir de données de phase (dp) à plusieurs chiffres, qui sont présentes avec la cadence initiale de données de couples de données DPSK, comportant :
- un premier additionneur (k1), qui réalise l'addition d'une constante et auquel sont envoyés un mot numérique ("45°"), qui correspond à l'angle de phase 45°, et les données de phase (dd),
- un additionneur (sm), dont la première entrée est raccordé à la sortie du premier additionneur (k1), qui réalise l'addition d'une constante,
- un premier soustracteur (s1), dont l'entrée du nombre à soustraire est raccordée à la sortie de l'additionneur (sm),
- un second soustracteur (s2) sur la sortie duquel peuvent être prélevées des données de différence de phase (dp) et à la sortie duquel est raccordé un décodeur DPSK en aval duquel est branché un décodeur "NICAM",
- un circuit de retardement (v), qui produit un retard égal à la durée de la période de la cadence de données et dont la sortie est raccordée à l'entrée du nombre à soustraire du second soustracteur (s2),
- un second additionneur (k2), qui réalise l'addition d'une constante et auquel est envoyé le mot numérique ("45°"), qui correspond à l'angle de phase 45°,
- l'entrée du minuende du second soustracteur (s2), le circuit de retardement (v) et le second additionneur (k2), qui réalise l'addition d'une constante, étant alimentés avec la position de signe (sb) et la position de poids maximum (mb) du signal de sortie de l'additionneur (sm), et
- un filtre passe-bas (tp) réalisé sous la forme d'un filtre à boucle PLL, au moyen duquel la sortie du premier soustracteur (s) est raccordée à la seconde entrée de l'additionneur (sm).
